(19) **Europäisches Patentamt / European Patent Office / Office européen des brevets**

(11) **EP 3 563 491 B1**

(12) **EUROPEAN PATENT SPECIFICATION**

(45) Date of publication and mention of the grant of the patent:
**18.03.2026 Bulletin 2026/12**

(21) Application number: **17825869.5**

(22) Date of filing: **22.12.2017**

(51) International Patent Classification (IPC):
**H04B 7/0452** (2017.01)   **H04B 7/0456** (2017.01)
**H04B 7/04** (2017.01)   **H04B 7/06** (2006.01)
**H04W 36/04** (2009.01)   **H04W 64/00** (2009.01)
**H04W 16/08** (2009.01)   **H04W 24/08** (2009.01)
**H04W 24/02** (2009.01)

(52) Cooperative Patent Classification (CPC):
**H04B 7/0452; H04B 7/0617; H04B 7/0639; H04W 16/08;** H04B 7/0482; H04W 24/02; H04W 24/08

(86) International application number:
**PCT/EP2017/084473**

(87) International publication number:
**WO 2018/122190 (05.07.2018 Gazette 2018/27)**

(54) **METHODS FOR CONTROLLING AN ANTENNA SYSTEM, TRANSMITTING AN INDICATOR, A COMPUTER SYSTEM AND WIRELESS TERMINAL**

**VERFAHREN ZUR STEUERUNG EINES ANTENNENSYSTEMS, ZUR ÜBERTRAGUNG EINES INDIKATORS, COMPUTERSYSTEM UND DRAHTLOSES ENDGERÄT**

**PROCÉDÉS DE COMMANDE D'UN SYSTÈME D'ANTENNE, DE TRANSMISSION D'UN INDICATEUR, SYSTÈME D'ORDINATEUR ET TERMINAL SANS FIL**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2016 EP 16207292**

(43) Date of publication of application:
**06.11.2019 Bulletin 2019/45**

(73) Proprietors:
• **Koninklijke KPN N.V.**
  **3072 AP Rotterdam (NL)**
• **Nederlandse Organisatie voor toegepast-natuurwetenschappelijk onderzoek TNO**
  **2595 DA 's-Gravenhage (NL)**

(72) Inventors:
• **JORGUSESKI, Ljupco**
  **2282 TR Rijswijk (NL)**
• **LITJENS, Remco**
  **2352 VH Voorschoten (NL)**
• **TRICHIAS, Konstantinos**
  **Mochato 18345 Athens (GR)**
• **ZHANG, Haibin**
  **2274 EA Voorburg (NL)**

(74) Representative: **De Vries & Metman**
**Overschiestraat 180**
**1062 XK Amsterdam (NL)**

(56) References cited:
**US-A1- 2005 272 472**   **US-A1- 2007 049 218**
**US-A1- 2012 113 830**   **US-A1- 2015 131 750**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This disclosure relates to a method for controlling an antenna system of a radio access network and to a computer system for a radio access network.

BACKGROUND OF THE INVENTION

Radio access networks need to be able to cope with increasing traffic loads due to the growing amount of wireless terminals that are connectable to such networks. Hence, it is important that the available resources of radio access networks, such as available bandwidth or power, are efficiently used.

Known methods for maximizing the efficiency of resource utilization of a radio access network, and particularly of a macro cell of a radio access network, comprise creating a virtual cell having (or not having) its own cell identity. The virtual cell is typically created by forming a radio beam using the same antennas as the macro cell or using antennas co-located with the macro-cell site. A beam is characterized with beam direction, beam-width and associated power and spectrum bandwidth. Some of the resources of the macro cell are then shared with the newly created virtual cell. For example, a fraction of the available bandwidth of the macro cell can be assigned to the virtual cell, which may be referred to as bandwidth sharing. In another example, a fraction of the transmit power of the macro cell is assigned to the virtual cell, which may be referred to as power sharing.

Implementing a virtual cell enables to (re)use available resources, e.g. spectrum, which may lead to more available resources for a cell, or may expand the overall traffic handling capacity per unit area of the macro cell, and thus of the radio access network. Implementing a virtual cell also improves the performance for users, since the beam(s) associated with the virtual cell point(s) towards the area where hot-spot traffic is.

US2015/0131750 discloses technology to adaptively sectorize a spatial region for parallel multi-user transmissions. In an example, a node (e.g., evolved Node B (eNB)) can include computer circuitry configured to: Generate a set of precoding matrices for a set of beam cones in the spatial region; and generate a beam cone for multi-user beamforming transmissions using system information for the beam cone. A precoding matrix in the set of precoding matrices can be used for each beam cone, and each beam cone can cover a beam cone spatial region that differs from another beam cone spatial region of another beam cone in the spatial region. Each beam cone can include system information that differs from the system information of the other beam cones in the spatial region.

US2012/0113830 discloses embodiments of an enhanced Node B (eNB) and a method for precoding with reduced quantization error. In some embodiments, first and second precoding-matrix indicator (PMI) reports may be received on an uplink channel and a single subband precoder matrix may be interpolated from precoding matrices indicated by both the PMI reports. Symbols for multiple-input multiple output (MIMO) beamforming may be precoded using the interpolated precoder matrix computed for single subband for a multiple user (MU)-MIMO downlink orthogonal frequency division multiple access (OFDMA) transmission. In some embodiments, each of the first and second PMI reports includes a PMI associated with a same subband that jointly describes a recommended precoder.

US2007/049218 discloses a method for enhancing performance in a wireless communication environment, comprising receiving a user preference for a transmission mode; associating the user preference with an entry or entries in a codebook; and assigning the user to a transmission mode corresponding to the entry or entries.

The authors of *"Performance assessment and Self-Organisation of Virtual Sectorisation in a realistic LTE network"* - 2016 9th IFIP Wireless and Mobile Networking Conference (WMNC), Colmar, 2016, pp. 81-88, have investigated algorithms to optimize the fraction of the available bandwidth assigned to the virtual cell and algorithms to optimize the fraction of the available transmit power assigned to the virtual cell. Herein, the decision which area is to be covered by the virtual cell, e.g. which electrical tilt and azimuth angles (with regard to beam direction) and beam-width an antenna array should apply, relies on assumed a priori knowledge of the spatial traffic distribution in the macro cell. For example, if a train station is present in the macro cell, the area covered by the virtual cell may be chosen such that it comprises the train station, based on high expected data traffic intensities in the area of the train station.

A disadvantage of the above method is that the virtual cell may not be optimally sized and/or positioned with regard to the actual and often dynamically varying traffic locations, so that a maximum increase in resource utilization efficiency and user performance is not achieved. If for example the spatial traffic distribution in the macro cell turns out to be different than expected, or if the spatial traffic distribution changes, the virtual cell may end up covering an area having a relatively low data traffic intensity, which may actually waste resources of the radio access network.

SUMMARY

The invention is defined in the independent claims. Advantageous embodiments are described in the dependent claims. Other embodiments and/or examples not falling under the claims and not comprising these features are not part of the claimed invention but are useful for understanding the invention.

It is an objective of the present invention to provide methods, computer systems and wireless terminals that enable a higher efficiency of resource utilization and improved user performance in radio access networks.

To this end a method is disclosed for controlling an antenna system of a radio access network to change a coverage area of a cell of the radio access network from a first area to a second area. The method comprises transmitting, e.g. broadcasting, a signal associated with the cell to a plurality of wireless terminals in the first area, receiving from the plurality of wireless terminals respective indicators, wherein each indicator has been determined by a wireless terminal on the basis of the signal and wherein the indicators comprise or are indicative of respective sets of one or more parameters, e.g. antenna configuration parameters, selecting from the sets a group of one or more similar sets, determining a further set of one or more parameters, e.g. antenna configuration parameters, on the basis of the group of one or more similar sets, controlling the antenna system to change the coverage area of the cell from the first to the second area on the basis of the further set of parameters.

Another aspect of this disclosure relates to a computer system for controlling an antenna system of a radio access network to change a coverage area of a cell of the radio access network from a first area to a second area, the computer system being configured to control the antenna system to transmit a signal associated with the cell to a plurality of wireless terminals in the first area, to receive from the plurality of wireless terminals respective indicators, wherein each indicator has been determined by a wireless terminal on the basis of the signal and wherein the indicators comprise or are indicative of respective sets of parameters, e.g. antenna configuration parameters, select from the sets a group of one or more similar sets, determine a further set of parameters, e.g. antenna configuration parameters, on the basis of the group of one or more similar sets, control the antenna system to change the coverage area of the cell from the first to the second area on the basis of the further set of parameters.

The disclosed techniques make use of indicators that may be determined on the fly by wireless terminals for adjustment of the coverage area. Hence, these indicators may better reflect an actual current situation, e.g. a current distribution of wireless terminals and/or traffic, than a priori knowledge.

Also, because a wireless terminal determines an indicator on the basis of the received signal, e.g. by measuring the signal, and because the signal is associated with the cell, e.g. conveyed with one or more radio beams associated with the cell, the indicators may directly indicate how signals of the cell can be better conveyed to the wireless terminal, e.g. how the one or more radio beams are to be adjusted, to optimally serve the wireless terminal. Such indicators enable to accurately position the coverage area. If for example explicit geographical coordinates of wireless terminals would be used to control the antenna system, the potential influence of environmental factors, such as the presence of buildings or weather conditions, would not be taken into account, whereas these factors are simply accounted for in the determination of the indicators according to the present disclosure. After all, the signal that is received by the wireless terminals has indeed been influenced by such environmental factors.

The disclosed techniques thus enable to improve the sizing and positioning of a coverage area of a cell. In particular, the disclosed techniques enable that the coverage area of a cell accurately matches a geographical area having a high density of wireless terminals that generates (or is expected to generate) large amounts of traffic. In other words, the disclosed techniques enable that the coverage area of a cell accurately matches a so called traffic hotspot, even if the traffic hotspot is moving. As known, such an accurate match improves the resource efficiency of a cell and thus of a radio access network, as well as user performance.

In embodiments, at least one of the plurality of wireless terminals is not connected to the cell and the method further comprises, and the computer system is configured for, transmitting one or more instructions to the at least one wireless terminal to determine an indicator on the basis of the signal and/or to transmit the indicator. These embodiments are advantageous because indicators are received also from wireless terminals that are not connected to the cell, for example because they are idle (e.g. not connected to a cell of the radio access network) or because they are connected to another cell of the radio access network. Hence, the existence of wireless terminals outside the serving area of the cell, but within the coverage area, may also considered and the coverage area may be changed on the basis of indicators received from these wireless terminals as well.

The signal may comprise the one or more instructions, which obviates the need to transmit these instructions separately.

In embodiments, the first area at least partly overlaps with a coverage area of a second cell of the radio access network and the at least one wireless terminal, that is not connected to the cell, is connected to the second cell. The second cell may be an macro cell associated with the cell or yet another (macro-)cell.

In embodiments, the at least one wireless terminal is not connected to a cell of the radio access network and the method comprises, and the computer system is configured for, transmitting one or more instructions to the at least one wireless terminal to connect to a cell of the radio access network. A state of a wireless terminal wherein the wireless terminal is not connected to any cell of the radio access network may be referred to as the wireless terminal being in idle mode. These embodiments enable that indicators are received from a larger number of wireless terminals and allow for anticipating data traffic.

In an embodiment the method comprises, and the computer system is configured for, transmitting to the plurality of wireless terminals an indication of a size of the to be received indicators. The indication of the size may be determined based on the number of wireless terminals in the coverage area and/or on the basis of the available capacity of the cell. Larger indicators, e.g. larger PMIs, enable to control the antenna system more accurately, which allows for more accurate positioning of the coverage area. However, larger indicators understandably cause larger signaling overhead on the network. These embodiments thus beneficially enable to manage the signaling overhead in the cell in respect of a desired accuracy for sizing and positioning the coverage area.

In embodiments, the method comprises, and the computer system is configured for, receiving from the plurality of wireless terminals respective mobility indicators, wherein each mobility indicator is indicative for a movement of a wireless terminal and determining the further set on the basis of the received mobility indicators. Hence, in these embodiments the further set of parameters is determined based on the received mobility indicators and on the group of one or more similar sets. Optionally, the method comprises, and/or the computer system is configured for, transmitting to the plurality of wireless terminals one or more instructions to determine and/or to transmit respective mobility indicators.

The mobility indicators may have been determined by the wireless terminals on the basis of the movement (e.g. velocity and directionality) of a wireless terminal. These embodiments conveniently enable that the coverage area is changed at least partly on the basis of movements of the plurality of wireless terminals. For example, if a group of wireless terminals is moving at high speeds, the second area is preferably sized larger in order to mitigate the impact of handover overhead as well as to avoid mismatching beams in case a fast wireless terminal has moved significantly in the period between the wireless terminal receiving the signal and the moment of changing the coverage area from the first to the second area.

In one embodiment the method for controlling an antenna system comprises, and the computer system is configured for, selecting from the sets a second group of one or more similar sets, determining a second further set on the basis of the second group of one or more similar sets; controlling the antenna system to define a further coverage area on the basis of the second further set of parameters. The further coverage area may be associated with the cell. In this case, the cell may thus at some point have at least two coverage areas, namely the second area and the further coverage area, which may or may not overlap each other. Alternatively, the further coverage area may be associated with a further cell of the radio access network. Again, the second area and the further coverage area may or may not overlap each other.

It should be appreciated that the second group of one or more similar sets may be selected in a similar manner as the group of similar sets. The second further set may be determined in a similar manner as the further set. The second coverage area and the further coverage area may be non-overlapping. These embodiments enable to efficiently serve distinct groups of wireless terminals, or distinct hotspots.

In embodiments, the method comprises, and the computer system is configured for, transmitting one or more instructions to at least one wireless terminal in the second area to perform a handover procedure, e.g. for connecting to the cell. These embodiments have the advantage that the performance gain brought by the change of coverage area may be achieved quickly, since wireless terminals are more quickly given a chance to be served by the most suitable cell, which may be the cell, but which may also be another cell of the radio access network.

It should be appreciated that the method may comprise, and the computer system may be configured for, transmitting to a wireless terminal any of the messages described in this disclosure (e.g. instructions, control messages, indications of the size of the to be transmitted indicator) via the cell and/or via another cell of the radio access network. If for example a wireless terminal is in idle mode and camping on the cell, the messages may be transmitted to the wireless terminal via the cell. If for example a wireless terminal is in idle mode and camping on another cell of the radio access network, the messages may be transmitted to this wireless terminal via said other cell.

Yet another aspect of this disclosure relates to a method for transmitting an indicator that comprises or is indicative of a set of one or more antenna configuration parameters. The method comprises receiving a signal associated with a cell of a radio access network while not being connected to the cell of the radio access network, determining the indicator on the basis of the received signal and transmitting the determined indicator to the radio access network.

Yet another aspect of this disclosure relates to a wireless terminal that is configured to connect to a cell of a radio access network, the wireless terminal further being configured to receive a signal associated with a cell of a radio access network while not being connected to the cell of the radio access network, and to determine at least one indicator on the basis of the received signal, wherein the indicator comprises or is indicative of a set of antenna configuration parameters, and to transmit the determined indicator to the radio access network.

In embodiments, the method for transmitting an indicator comprises, and the wireless terminal is configured for, receiving one or more control messages from the radio access network and in response to the received one or more control messages determining an indicator on the basis of the received signal and/or transmitting the determined indicator to the radio access network.

In embodiments, the method for transmitting an indicator comprises, and the wireless terminal is configured for, in response to determining that a power of the signal as received exceeds a power threshold and/or in response to determining that a quality of the signal as received exceeds a quality threshold, determining and/or transmitting the indicator. Note that the power threshold and/or the quality threshold may be received from the radio access network. Hence, the method for controlling an antenna system may comprise, and the computer system may be configured for, transmitting said thresholds to a wireless terminal.

In embodiments, the method for transmitting an indicator comprises, and the wireless terminal is configured for, receiving an indication of a size of the to be transmitted indicator and determining the indicator on the basis of the received indication, wherein the determined indicator is of the indicated size.

In embodiments, the method for transmitting an indicator comprises, and the wireless terminal is configured for, determining a mobility indicator that is indicative for a movement of the wireless terminal and transmitting the mobility indicator. Optionally, the method comprises, and the wireless terminal is configured for, receiving one or more instructions to determine and/or transmit a mobility indicator and in response determining and/or transmitting the mobility indicator.

In embodiments, the method for transmitting an indicator comprises, and the wireless terminal is configured for, receiving one or more instructions to connect to a cell of the radio access network and in response connecting to a cell.

In embodiments, the method for transmitting an indicator comprises, and the wireless terminal is configured for, receiving one or more instructions to perform a handover procedure, e.g. for connecting to the cell, and in response performing the handover procedure. The handover procedure may result in the wireless terminal being connected to the cell or to another cell of the radio access network, preferably to the most suitable serving cell.

It should be appreciated that the method may comprise and that the wireless terminals may be configured for, receiving any of the messages (for example the control messages, instructions, indications of the size of the to be transmitted indicator) mentioned in this disclosure via the cell and/or via another cell of the radio access network. The messages may be received via the cell to which the wireless terminal is currently connected. Further, in case a wireless terminal is in idle mode and camping on the cell, the messages may be received via the cell. In case a wireless terminal is in idle mode and camping on a second cell of the radio access network, the messages may be received via the second cell.

One aspect of this disclosure relates to a telecommunications system comprising at least one wireless terminal as described above and comprising the computer system as described above.

One aspect of this disclosure relates to control messages and/or instructions and/or signals as disclosed herein.

One aspect of this disclosure relates to a computer program or suite of computer programs comprising at least one software code portion or a computer program product storing at least one software code portion, the software code portion, when run on a computer system, being configured for executing a method as described above.

The computer system may comprise a computer readable storage medium having computer readable program code embodied therewith, and a processor, preferably a microprocessor, coupled to the computer readable storage medium, wherein responsive to executing the computer readable program code, the processor is configured to perform executable operations comprising one or more of the method steps as described above.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "computer system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In one aspect, embodiments of the present invention may relate to a computer-implemented method for controlling an antenna system and/or for transmitting an indicator.

Moreover, a computer program for carrying out the methods described herein, as well as a non-transitory computer readable storage-medium storing the computer program are provided. A computer program may, for example, be downloaded (updated) to the existing computer system or be stored upon manufacturing of such systems.

Embodiments of the present invention will be further illustrated with reference to the attached drawings, which schematically will show embodiments according to the invention. It will be understood that the present invention is not in any way restricted to these specific embodiments.

BRIEF DESCRIPTION OF THE DRAWINGS

Aspects of the invention will be explained in greater detail by reference to exemplary embodiments shown in the drawings, in which:

    Fig. 1 is an illustration of a cellular telecommunications system;
    Fig. 2 is a flowchart illustrating method steps according to embodiments;
    Fig. 3 illustrates an effect of one embodiment;
    Figs. 4 and 5 show indicators that may be involved in the disclosed techniques;
Fig. 6 is a flowchart illustrating method steps according to further embodiments;
Figs. 7-10 illustrate possible effects of embodiments;
Fig. 11 depicts a block diagram illustrating an exemplary data processing system.

DETAILED FIGURE DESRIPTION

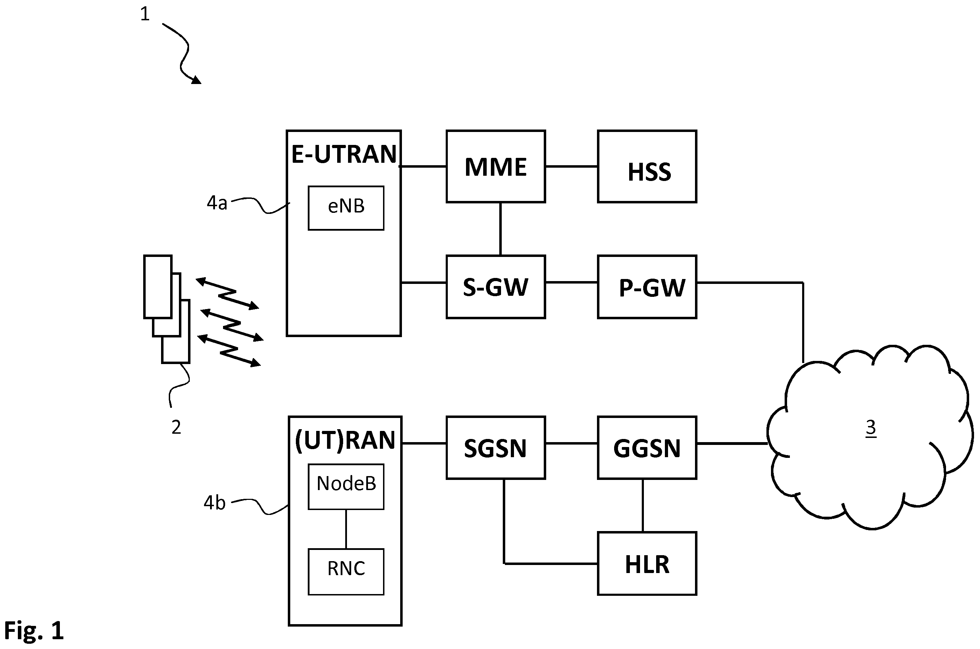

FIG. 1 shows a schematic illustration of a cellular telecommunications system 1. The telecommunications system 1 comprises a radio access network 4 (also indicated as E-UTRAN 4a or (UT)RAN 4b in FIG. 1) and a core network system containing various elements or nodes as described in further detail below.

In the telecommunications system of FIG. 1, three generations of networks are schematically depicted together for purposes of brevity. A more detailed description of the architecture and overview can be found in 3GPP Technical Specification TS 23.002 'Network Architecture' which is included in the present application by reference in its entirety.

The lower branch of FIG. 1 represents a GSM/GPRS or UMTS network.

For a GSM/GPRS network, a radio access network 4b (RAN) system comprises a plurality of nodes, including base stations (combination of a BSC and a BTS), not shown individually in FIG. 1. The core network system comprises a Gateway GPRS Support Node (GGSN), a Serving GPRS Support Node (SGSN, for GPRS) or Mobile Switching Centre (MSC, for GSM, not shown in FIG. 1) and a Home Location Register (HLR). The HLR contains subscription information for wireless terminals 2.

For a UMTS radio access network 4a (UTRAN), the radio access network system also comprises a Radio Network Controller (RNC) connected to a plurality of base stations (NodeBs), also not shown individually in FIG. 1. In the core network system, the GGSN and the SGSN/MSC are connected to the HLR that contains subscription information of the wireless terminals 2.

The upper branch of the telecommunications system in FIG. 1 represents a next generation network, commonly indicated as Long Term Evolution (LTE) system or Evolved Packet System (EPS).

The radio access network 4a, indicated as E-UTRAN, comprises base stations (evolved NodeBs, eNodeBs or eNBs), not shown individually in FIG. 1, providing cellular wireless access for a wireless terminal 2. The core network system comprises a PDN Gateway (P-GW) and a Serving Gateway (S-GW). The E-UTRAN of the EPS is connected to the S-GW via a packet network. The S-GW is connected to a Home Subscriber Server HSS and a Mobility Management Entity MME for signaling purposes. The HSS includes a subscription profile repository SPR for wireless terminals 2.

For GPRS, UMTS and LTE systems, the core network system is generally connected to a further packet network 3, e.g. the internet.

Further information of the general architecture of a EPS network can be found in 3GPP Technical Specification TS 23.401 'GPRS enhancements for Evolved Universal Terrestrial Radio Access Network (E-UTRAN) access'.

The radio access network 4a, 4b may comprise any type of network, such as 2G, 3G, 4G, 5G, or further generations of radio access networks, or any combination of them (heterogeneous network). Some examples of radio access networks include GERAN (GSM/EDGE), UTRAN (UMTS), E-UTRAN (LTE), and WiFi. The radio access network may be part of a mobile telecommunications system and may provide wireless terminals access to a core network.

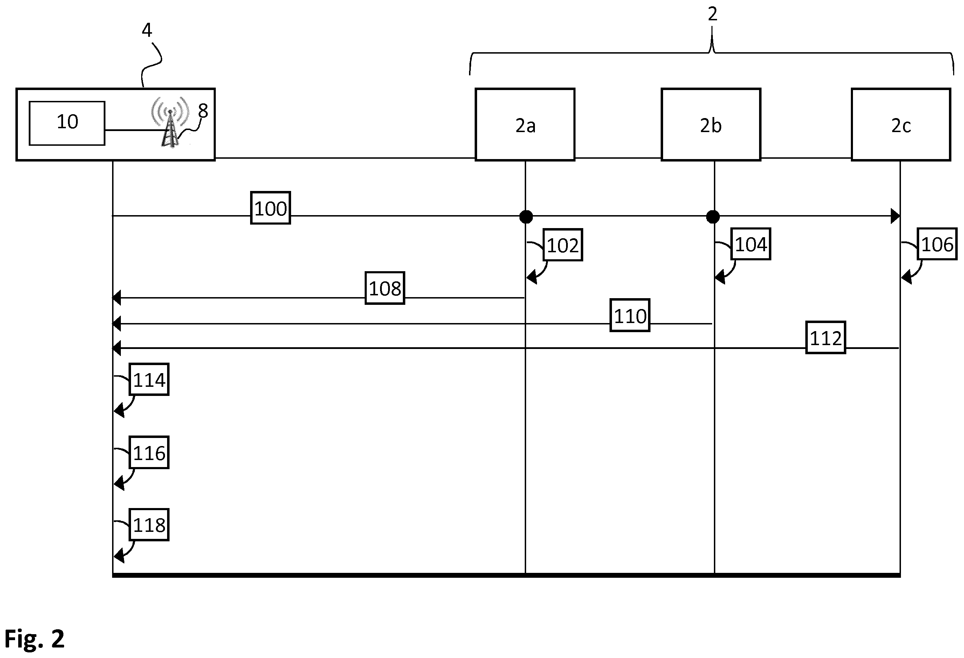

Fig. 2 is a flow chart illustrating steps of the method for controlling an antenna system as well as steps of the method for transmitting an indicator. In step 100 the computer system 10 transmits a signal associated with a cell of radio access network 4a, 4b to a plurality of wireless terminals 2.

The antenna system 8 may comprise one or more antenna arrays (not shown) that may be separately controllable by means of computer system 10. The antenna system 8 may comprise an active antenna system (AAS). Hence, a radiation pattern of one or more radio beams associated with the antenna system 8 may be dynamically adjustable.

The signal may be said to be generated by the cell and may comprise an identity of the cell and/or may be a reference signal, such as a Cell-Specific Reference signal (CRS) in LTE/LTE-Advanced/E-UTRAN, Common Pilot Channel (CPICH) signal in UMTS/UTRAN and/or Broadcast Control Channel (BCCH) signal in GSM/GERAN.

In step 100 each of the plurality of wireless terminals 2a-2c receive the signal. A wireless terminal may or may not be connected to the cell when it receives the signal. In an example, wireless terminals 2a and 2b are not connected to the cell and wireless terminal 2c is. In general, a wireless terminal being connected to a cell of a radio access network may imply that the wireless terminal can communicate with the radio access network via the cell.

A wireless terminal 2 may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a user equipment (UE), a remote terminal, a handset, a terminal, a user agent, a mobile client, a client, or some other suitable terminology. Examples of a wireless terminal include a cellular phone, a smart phone, a session initiation protocol (SIP) phone, a laptop, a notebook, a netbook, a smartbook, a personal digital assistant (PDA), a tablet computer, a satellite radio, a global positioning system (GPS) device, a multimedia device, a video device, a digital audio player, a camera, a game console, or any other similar functioning device. A wireless terminal may comprise a subscriber identification module (SIM) or universal subscriber identity module (USIM).

In step 102, 104 and 106, the wireless terminals 2a, 2b and 2c respectively determine an indicator on the basis of the received signal. The indicator is indicative of a set of one or more parameters, in this example antenna configuration parameters. Any parameter based on which an antenna system can be configured, e.g. a parameter based on which an antenna system can shape a radio beam, may be understood to be an antenna configuration parameter.

A set of one or more antenna configuration parameters may comprise antenna weighting factors on the basis of which an antenna system typically forms a radio beam and/or on the basis of which a signal may be distributed between several physical or virtual antennas. In one embodiment, an indicator as determined by a wireless terminal indicates which antenna configuration parameters should be used for controlling the antenna system 8 in order to optimally transfer signals to that wireless terminal. In other words, an indicator may be indicative of a wireless terminal's preferred antenna configuration parameters. An indicator may be a precoding matrix indicator as known in the art.

Determining an indicator on the basis of the received signal may comprise measuring a received signal strength and/or quality of the signal and determining the indicator, e.g. selecting a precoding matrix indicator, on the basis of such measurement. An indicator may for example comprise an RSRP (Reference Signal Received Power) report in case CRS is used as the signal, as defined in the 4G LTE/LTE-Advanced standard. It should be appreciated that the wireless terminal may be configured for determining the indicator on the basis of, in addition to the signal, at least one other signal as well, for example on a signal associated with another cell. However, it should be appreciated that in such a case, preferably, the most significant signal in the determination of the indicator is the signal associated with the cell.

Then, in steps 108, 110 and 112 the wireless terminals 2a, 2b and 2c respectively transmit the determined indicators to the radio access network, e.g. to antenna system 8 and computer system 10 of the radio access network 4. In these steps 108, 110, 112, the computer system 10, preferably via antenna system 8, receives from the plurality of wireless terminals 2a-2c the respective indicators. The indicator transmitted in step 108 may be indicative of a first set of one or more antenna configuration parameters, the indicator transmitted in step 110 of a second set of one or more antenna configuration parameters and the indicator transmitted in step 112 of a third set of one or more antenna configuration parameters.

In step 114 the computer system selects from the sets as indicated by the received indicators, a group of one or more similar sets. In one embodiment, the above-mentioned first set is identical to the second set and the third set is different. The computer system may then select in step 114 the first and second set as the group of one or more similar sets. "Similar sets" may thus also comprise "identical sets". A degree of similarity between two sets may be related to a mathematical distance between the sets of parameters. It should be appreciated that a degree of similarity between two sets of parameters may be indicative of how near the two corresponding wireless terminals are positioned together.

A higher degree of similarity may indicate two wireless terminals 2 sitting closer together. In the context of this disclosure, distance (and closeness) may relate to a geographical distance, however, the concept of distance may more importantly relate to an extent to which two wireless terminals may be able to discern signals conveyed with the same radio beam. Two wireless terminals may sit geographically close together, yet in the context of this disclosure may not be considered close to each other, for example because the wireless terminals are separated by an environmental element, such as a hill or building, that blocks a radio beam.

Selecting the group of similar sets in step 114 may comprise applying a clustering algorithm to the plurality of sets, wherein the clustering algorithm outputs the group of similar sets. The group of similar sets may comprise, in one case, all sets as indicated by the received indicators.

In step 116, the computer system 8 determines a further set of antenna configuration parameters on the basis of the group of one or more similar sets that is selected in step 114. The further set of antenna configuration parameters may have a respective (mathematical) distance from each of the sets in the group of one or more similar sets. The further set of antenna configuration parameters may be determined such that the sum of the above-described respective distances is minimum. The further set of antenna configuration parameters may be an average set of the group of one or more similar sets. The further set of parameters may be identical to at least one of the sets in the group of similar sets.

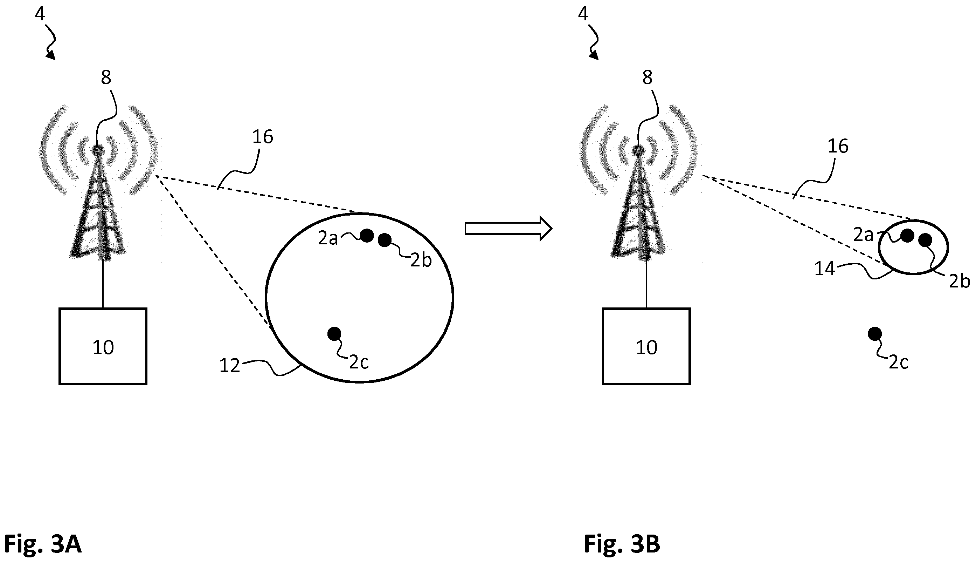

In step 118, the computer system 8 controls the antenna system to change the coverage area of the cell from the first to the second area on the basis of the further set of antenna configuration parameters, which is illustrated by Figs. 3A and 3B.

Figs. 3A and 3B schematically exemplify an effect of one embodiment. The radio access network 4 comprises antenna system 8 and computer system 10. Antenna system 8 forms a radio beam 16 that is associated with the cell of the radio access network 4. The coverage area of the cell in Fig. 3A is the first area 12. Fig. 3B shows the coverage area after it has been adjusted to be second area 14.

The coverage area of a cell 12,14 may be defined as the area in which a wireless terminal 2 can receive discernable signals associated with the cell. Herein, signals may be considered discernable if the received power (e.g. RSRP (Reference Signal Received Power)in LTE) and/or quality (e.g. RSRQ (Reference Signal Received Quality) in LTE) of these signals as received by a wireless terminal exceeds a minimum value. If the power and/or quality of the signals as received does not exceed this minimum value, the wireless terminal 2 may not be able to discern the signals, for example because the signal to noise ratio in that case becomes too low.

The first area 12 and second area 14 may be geographical areas. The areas may extend and be defined in a 2D plane, but may also extend and be defined in a 3D space (not shown). Furthermore, the second area 14 may be larger or smaller than the first area 12. The second area 14 may be a part of the first area 12. The second area 14 may include the first area 12 in its entirety or in part.

Continuing the above example, wireless terminals 2a and 2b may not be connected to the cell, although they are in the coverage area of the cell. In an example wireless terminal 2a is not connected because it is connected to another cell of the radio access network (not shown) and wireless terminal 2b is not connected because it is in idle mode and not connected to any cell of the radio access network.

Controlling the antenna system 8 to change the coverage area of the cell may comprise controlling the antenna system 8 to change a direction and/or a shape of at least one radio beam 16 associated with the cell. The computer system 8 may be configured to control the antenna system 8 accordingly. As will be understood, the adjustment of the coverage area may influence which wireless terminals are connected to the cell. See for example wireless terminal 2c in Fig. 3B which sits outside of the coverage area 14 of the cell and hence can no longer be connected to the cell.

In one embodiment the method comprises controlling the antenna system 8 to define the coverage area of the cell to be the first area 12. The computer system 10 may be configured to perform this step. This step may be performed on the basis of an initial estimation of a distribution of wireless terminals and/or data traffic in an area. In an example, an area comprises a sub-area in which high densities of wireless terminals and thus of data traffic are expected, such as a sub-area comprising a train station, a shopping mall, etc.

Controlling the antenna system 8 to define the coverage area of the cell to be the first area 12 may also be performed on the basis of Minimisation of Drive Tests and/or on the basis of explicitly reported locations by wireless terminals 2 and/or on the basis of uplink signals received from wireless terminals 2. The 3GPP Technical Specification TS36.605 describes the terminal positioning methods standardized for LTE, which may be used for defining the coverage area of the cell to be the first area 12.

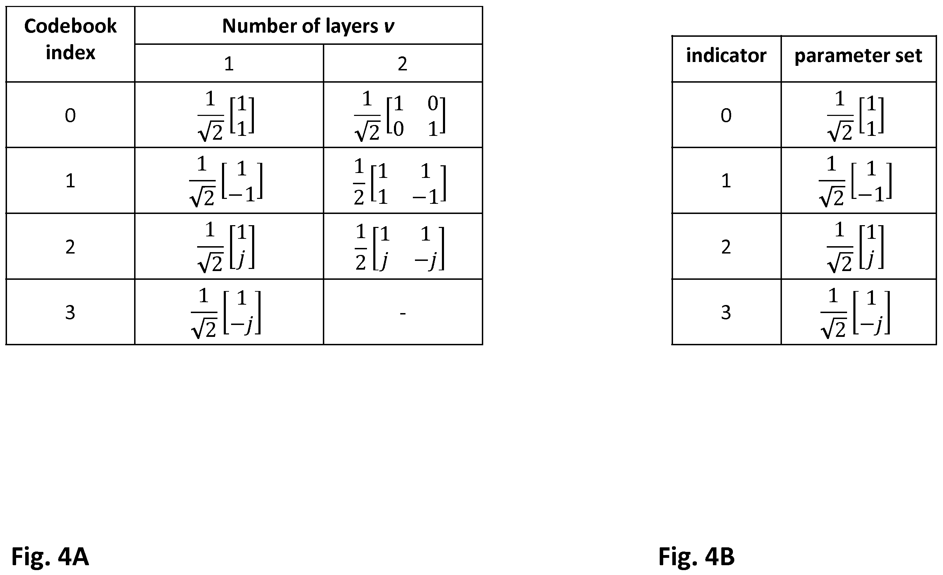

Fig. 4A shows a codebook as defined in the LTE/LTE-Advanced standard for an antenna system having two antenna ports (and therefore specifying maximum two layers). The codebook contains seven sets of antenna configuration parameters. As known, a wireless terminal may report a preferred precoding matrix indicator, or a codebook index number as shown, to the radio access network for indicating which set of antenna configuration parameters the wireless terminal prefers to be used by the radio access network for transmission. It should be understood that the indicators transmitted by the wireless terminals and received by the computer system 10 may comprise such precoding matrix indicators (PMIs). A PMI may be transmitted by a wireless terminal 2, and may be received by the radio access network, as part of channel-state information (CSI) based on which the radio access network may make e.g. scheduling decisions.

Fig. 4B is a list of indicators according to one embodiment that are indicative of sets of antenna configuration parameters. The parameter sets may correspond to parameter sets in a standardized codebook, e.g. the codebook shown in Fig. 4A, in particular to parameter sets in a standardized codebook that are related to one-layer transmission. For the purpose of determining a distribution of wireless terminals over an area, one-layer precoding matrices may be sufficient.

A set of parameters may be expressed as a vector and/or a matrix and hence the degree of similarity between two sets of parameters may relate to a summed square distance, e.g. a Euclidian distance, between two vectors and/or between two matrices.

To illustrate, two wireless terminals, e.g. 2a and 2b, may both determine an identical indicator, e.g. "0", on the basis of the signal, whereas another wireless terminal, e.g. terminal 2c, determines a different indicator, e.g. "2". Hence, in an example, the sets of parameters from which the computer system 10 is to select a group of similar sets comprises:

$$\text{set (i) (wireless terminal 2a): } \frac{1}{\sqrt{2}}\begin{bmatrix}1\\1\end{bmatrix}$$

$$\text{set (ii) (wireless terminal 2b): } \frac{1}{\sqrt{2}}\begin{bmatrix}1\\1\end{bmatrix}$$

$$\text{set (iii) (wireless terminal 2c): } \frac{1}{\sqrt{2}}\begin{bmatrix}1\\j\end{bmatrix}.$$

The computer system 10 may then select set (i) and set (ii) to be in the group of similar sets. This may involve applying a clustering algorithm and/or calculating a mathematical distance between at least some of the sets. In the example, such calculation may yield that the distance between set (i) and set (ii) is zero, whereas set (iii) is at a certain distance from both sets (i) and set (ii). On the basis of these calculated distances, the computer system may then select set (i) and set (ii) to be in the group of similar sets.

Subsequently, the computer system 10 determines the further set of parameters. In this example, the determination of the further set is relatively straightforward since the group of similar sets comprises two identical sets. Hence, the computer system 10 determines the further set to be $\frac{1}{\sqrt{2}}\begin{bmatrix}1\\1\end{bmatrix}$.

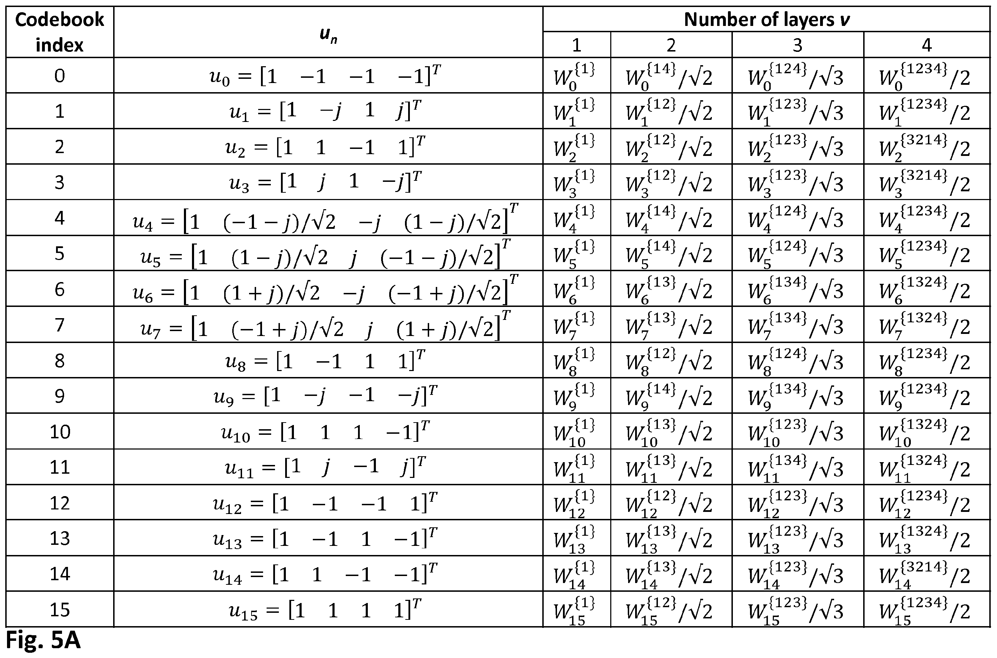

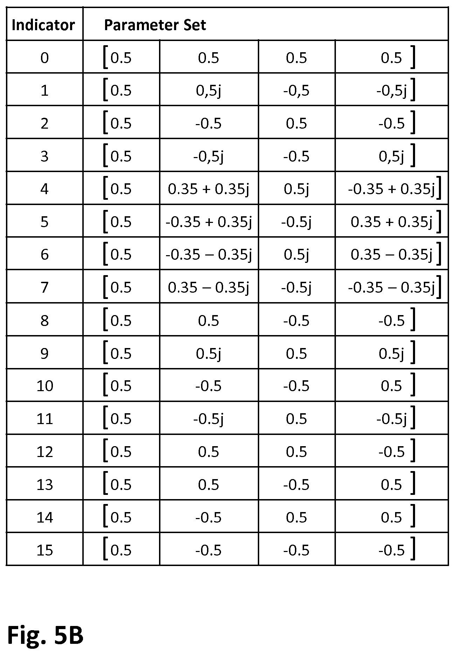

Fig. 5A shows a codebook as defined by the LTE/LTE-Advanced standard for transmission using four antenna ports. The indicators shown in Fig. 5B may be determined and transmitted by a wireless terminal. In this example, these indicators are based on the standard codebook shown in Fig. 5A. Sixteen indicators indicate respective parameter sets. The parameter sets in Fig. 5B correspond to the parameters sets in column "1" of Fig. 5A that (implicitly) lists the antenna configuration parameter sets for one layer transmission. Note that $W_0^{(1)}$ corresponds to parameter set [0.5 0.5 0.5 0.5] in Fig. 5B according to formula $W_{n} = I - 2u_n u_n^H / u_n^H u_n$. The superscript "(1)" in "$W_0^{(1)}$" indicates the first column of matrix $W_0$.

In one embodiment, the computer system 10 transmits an indication of a size of the to be received indicator. This indication of a size may for example indicate to the plurality of wireless terminals whether it should (determine and) transmit one of the indicators as shown in Fig. 4B, or whether it should (determine and) transmit one of the indicators as shown in Fig. 5B. The indication of a size may thus be an indication of which codebook the indicators should refer to. As known in the art, less bits are required to indicate one out of four indicators than to indicate one out of sixteen indicators. Especially when "bit mapped" strings are used to transmit the indicators. Each position in a bit mapped string namely represents a number. If for example a wireless terminal transmits indicator "3" shown in Fig. 4B, the wireless terminal may transmit the four bits "1000", whereas a terminal transmitting indicator "3" as shown in Fig. 5B it may transmit the sixteen bits "0000 0000 0000 1000".

The more sets of antenna configuration parameters a wireless terminal can choose from, the more accurate it can indicate its preferred antenna configuration parameters to be used by the computer system 10.

In the above, reference is made to antenna configuration parameters. However, it should be understood that at least some aspects of this disclosure may alternatively and/or additionally involve other types of indicators that comprise or are indicative of other types of parameters than antenna configuration parameters. Such other types of parameters for example comprise parameters representing received signal strength on each of multiple antennas. In embodiments the method for controlling an antenna system comprises, and the computer system is configured for, transmitting to the plurality of wireless terminals an indication of a type of the to be received indicators. In such embodiments the received indicators may be of the indicated type.

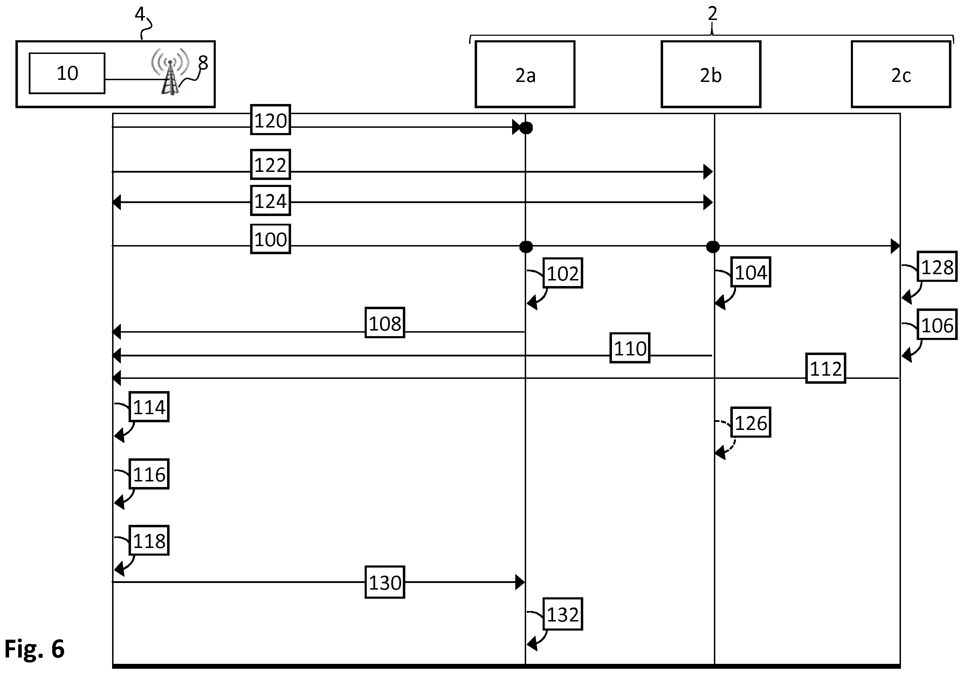

Fig. 6 is a flow diagram illustrating several embodiments. For illustration purposes, it is assumed that terminals 2a, 2b and 2c are in the first area (the coverage area of the cell before adjustment of the coverage area). Further, it is assumed that terminal 2a is not connected to the cell because terminal 2a is connected to another cell of the radio access network, that terminal 2b is not connected to the cell, because it is in idle mode and thus not connected to any cell of the radio access network and that terminal 2c is connected to the cell.

In one embodiment, the method comprises transmitting one or more instructions (step 120) via said other cell to at least one terminal 2a to determine an indicator on the basis of the signal and/or to transmit the indicator. In step 120 the at least one terminal 2a receives these instructions, which may also be referred to as control messages, from the radio access network, e.g. from the antenna system 8, via said other cell. In response to these instructions or control messages, the at least one wireless terminal 2a may determine an indicator on the basis of the signal transmitted in step 100 and/or transmit the indicator in step 102. It is noted that wireless terminal 2a may transmit the determined indicator to the radio access network 1, in particular to computer system 10, via the second cell.

In one example, the wireless terminal 2a has already determined the indicator on the basis of the signal associated with the cell before receiving instructions or control messages, i.e. prior to step 120. In response to the control messages (step 120) the wireless terminal 2a may transmit the already determined indicator.

In another example, the wireless terminal 2a only determines (step 102) the indicator once it has received said instructions (step 120) or control messages (step 120).

In one embodiment, the method for controlling an antenna system comprises, and the computer system 10 is configured for, transmitting one or more instructions (step 122) to at least one wireless terminal 2b to connect to a cell of the radio access network. In one embodiment the method for transmitting an indicator comprises, and in one embodiment the wireless terminal 2b is configured for, in response to receiving such instructions (step 122) connecting (step 124) to a cell of the radio access network 4, so that the wireless terminal 2b can transmit its indicator to the radio access network 4 via that cell. Note that the wireless terminal 2b may (be instructed to) connect to any cell of the radio access network, not necessarily the cell of which the coverage area is adjusted. In an optional step 126, the wireless terminal 2b, after a period of time, disconnects from the cell to which it is connected.

It should be appreciated that all instructions and/or control messages and/or information referred to in this disclosure, e.g. the instructions sent in steps 120, 122, 130, may be comprised in one signal, e.g. in the signal transmitted in step 100. In an example, the signal transmitted in step 100 comprises both an instruction to determine the indicator and a size of the to be transmitted indicator. However, as shown, the messages may also be transmitted separately.

In step 100 the computer system 10 controls antenna system 8 to transmit a signal, e.g. a broadcast signal, associated with the cell to a plurality of terminals 2a, 2b, 2c. In step 100 each of the wireless terminals 2a, 2b, 2c receive the signal.

In one embodiment the method for transmitting an indicator comprises, and in one embodiment a wireless terminal is configured for, in response to determining (step 128) that a power of the signal as received exceeds a power threshold and/or that a quality of the signal as received exceeds a quality threshold, determining (step 106) and/or transmitting (step 112) the indicator. The power as received by a wireless terminal may be expressed as a Reference Signal Received Power (RSRP) value as defined in the 4G standard and the quality of the signal as received may be expressed as a Reference Signal Received Quality (RSRQ) value as defined in the 4G standard. The value of the power threshold may be higher than the minimum value described above that may be used for defining the coverage area.

In one embodiment the method for controlling an antenna system comprises, and in one embodiment the computer system 10 is configured for, transmitting to at least one wireless terminal, e.g. wireless terminal 2a, one or more instructions (step 130) to perform a handover procedure. Of course, such instructions could also be transmitted to wireless terminal 2b (not shown) if step 126 has not been performed and terminal 2b is still connected to a cell of the radio access network. In one embodiment the method for transmitting an indicator, and in one embodiment the wireless terminal is configured for, in response to receiving such instructions, initiate a handover procedure. The handover procedure may or may not be successful. The instructions may comprise instructions to perform a handover procedure for connecting to the cell and/or instructions to perform a handover procedure for connecting to another cell of the radio access network.

Combinations of embodiments are envisioned. In an example, a wireless terminal that is not connected to the cell will determine and/or transmit an indicator in response to both receiving control message(s) (as transmitted in step 120) and determining that a power of the signal as received exceeds a power threshold (step 128). The wireless terminal may then only transmit its indicator if the following conditions (i) and (ii) are satisfied: (i) the above-described control messages(s) have been received and (ii) the wireless terminal has determined that a power of the signal as received exceeds a power threshold.

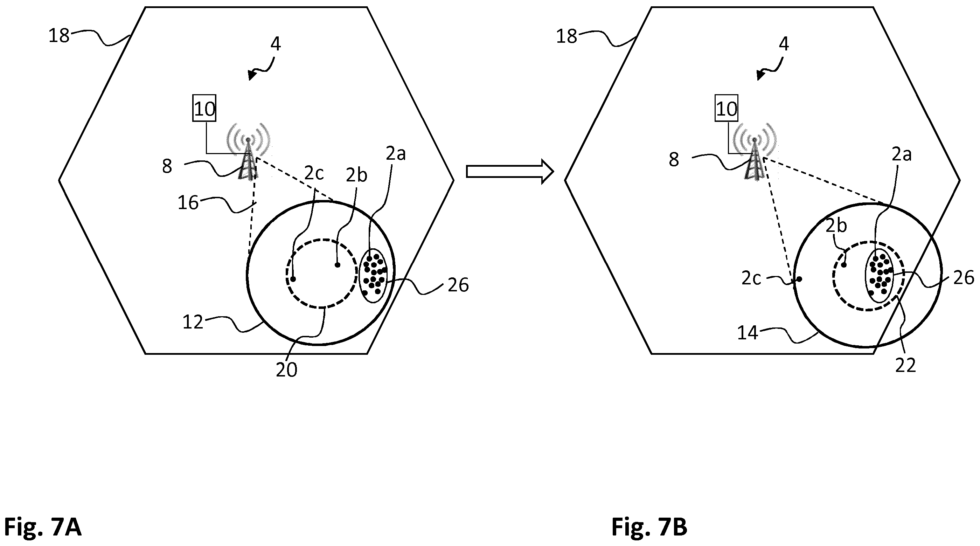

Figs. 7A and 7B exemplify an effect of an embodiment. In this embodiment the first area 12 of the cell at least partly overlaps with a coverage area 18 of a second cell of the radio access network and at least one wireless terminal 2a is connected to the second cell. This second cell is for example a macro-cell. The second cell may have a fixed coverage area.

As known in the art, the radio access network 4 may comprise a plurality of cells. The cell of which the coverage area is adjusted may be a sub-cell, or a so-called virtual cell, for example a virtual cell within or overlapped with a macro-cell, or even not overlapped with any macro-cell.

In Fig. 7A and B serving areas 20, 22 are indicated by the dashed circles. In other figures of this disclosure, dashed circles will also indicate serving areas. A serving area of a cell may be defined as the area in which wireless terminals are indeed connected to that cell. Note that in the figures of this disclosure the dots represent wireless terminals. Fig. 7A shows that wireless terminal 2a sits within the first area 12, yet outside of the serving area 20 of the cell. As a result, wireless terminal 2a may receive stronger signals associated with a second cell having coverage area 18. As known, in such a case a wireless terminal may end up connecting to the second cell instead of the cell.

The first area 12 comprises a first serving area 20 and the second area 14 a second serving area 22. The second serving area may have a higher density of wireless terminals than the first area. The second serving area may be associated with a higher amount of expected or potential or current traffic than the first serving area and/or the second serving area may be associated with a higher expected or potential or current density of traffic than the first serving area, wherein density of traffic may be expressed in amounts of traffic per unit area. Figs. 7A and B show that the change of the coverage area from area 12 to area 14 influences the serving area of the cell.

In Fig. 7B the coverage area of the cell is better positioned than in Fig. 7A, because the coverage area, and in particular the serving area, better matches the traffic hotspot 26, having a high density of wireless terminals.

It is easily understood that this is a result of (many) wireless terminals in the traffic hotspot 26 transmitting an indicator indicative of a parameter set. In addition, the wireless terminals 2 in the hotspot area 26 sit relatively close together. Hence, in an example, the indicators transmitted by the wireless terminals sitting in traffic hotspot 26 are indicative of (many) parameter sets that are quite similar. These sets may then be selected as group of similar sets, based on which the further set is determined for controlling the antenna system 8. As a result the coverage area is adjusted into area 14, that nicely covers the hotspot area.

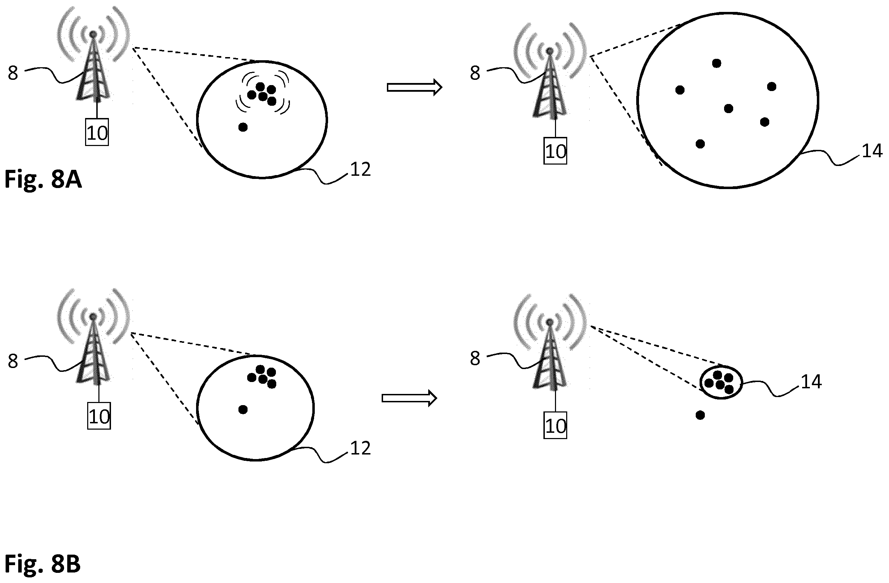

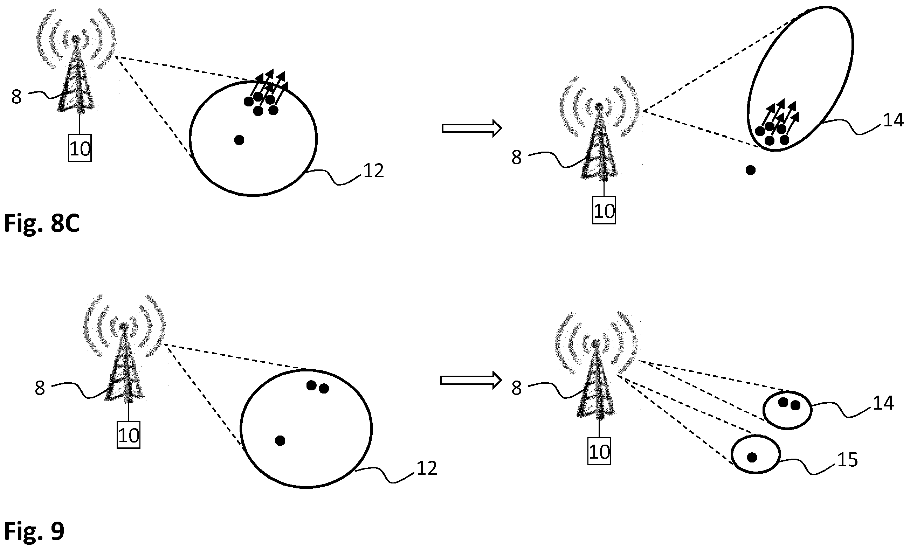

Fig. 8 illustrates the influence of mobility indicators that may be determined by wireless terminals 2 on the change of the coverage area from the first to the second area. In one embodiment the method for controlling an antenna system 8 comprises, and in one embodiment the computer system 10 is configured for, transmitting to the plurality of wireless terminals one or more instructions to determine and/or transmit respective mobility indicators. In one embodiment the method for transmitting an indicator comprises, and in one embodiment the wireless is configured for, optionally in response to receiving these instructions, determining a mobility indicator that is indicative for a movement of the wireless terminal and transmitting this mobility indicator to the radio access network.

In one embodiment the method for controlling an antenna system comprises, and in one embodiment the computer system 10 is configured for, receiving from the plurality of wireless terminals respective mobility indicators, wherein each mobility indicator is indicative for a movement of a wireless terminal and determining the further set on the basis of the received mobility indicators.

The mobility indicators may be indicative for a direction and/or speed of movement of a wireless terminal, which allows to even better size and position the second area and in particular to anticipate movement of a hotspot.

The wireless terminals shown in Fig. 8A are moving quite a bit. Since the computer system 10 determines the further set of antenna configuration parameters on the basis of the mobility indicators as well, the computer system can determine that it is more efficient to determine the further set of parameters such that a large second area 14 becomes the coverage area of the cell.

In contrast, Fig. 8B shows an example situation wherein the same wireless terminals sit relatively still. Again, since the computer system 8 controls the antenna system 8 to change the coverage area on the basis of the further set of antenna configuration parameters, which in turn is determined on the basis of the mobility indicators, the second area may be chosen relatively small so as to focus resources on one small area.

Fig. 8C shows an example situation wherein a plurality of wireless terminals are moving in one specific direction as indicated by the arrows. In this embodiment, the mobility indicators are indicative of a direction of movement of the respective wireless terminals. As a result, the second area may be formed such that the movement of the wireless terminals is anticipated.

Fig. 9 illustrates an effect of other embodiments. In one embodiment the method for controlling an antenna system comprises, and in one embodiment the computer system 10 is configured for, selecting from the sets a second group of one or more similar sets, determining a second further set on the basis of the second group of one or more similar sets and controlling the antenna system to define a further coverage area 15 on the basis of the second further set of parameters. The further coverage area 15 may belong to the cell. Alternatively, the further coverage area 15 may be a coverage area of another cell of the radio access network 4.

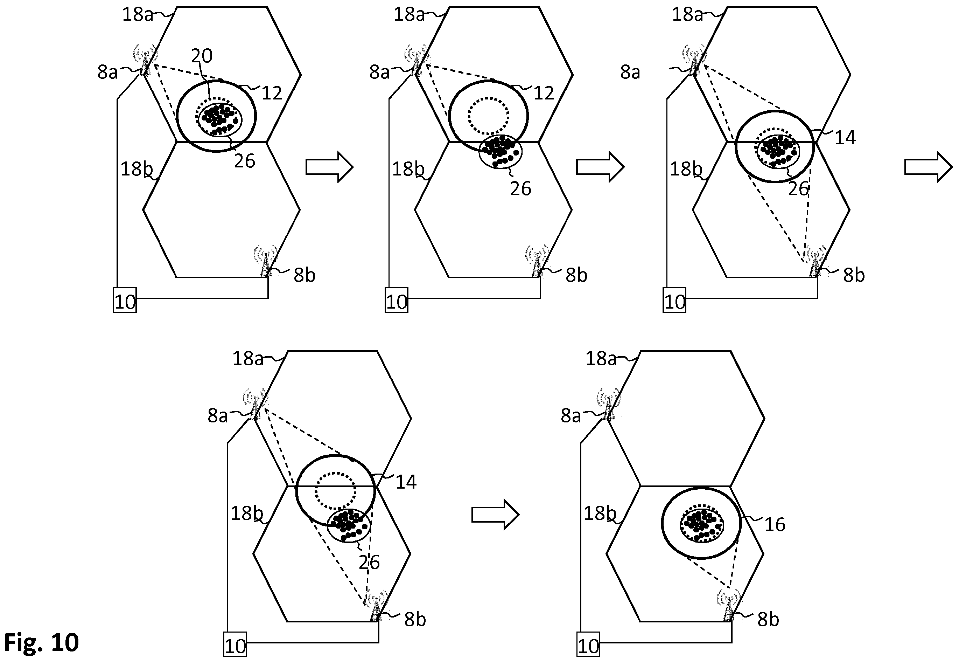

Fig. 10 illustrates effects of other embodiments. In one embodiment the method for controlling an antenna system comprises, and in one embodiment the computer system 10 is configured for, transmitting a second signal associated with the cell to a second plurality of wireless terminals in the second area and receiving from the second plurality of wireless terminals respective second indicators, wherein each second indicator has been determined by a wireless terminal on the basis of the second signal and wherein the indicators comprise or are indicative of respective second sets of one or more parameters, e.g. antenna configuration parameters, selecting from the second sets a third group of one or more similar second sets, determining a third further set of one or more parameters, e.g. antenna configuration parameters, on the basis of the third group of one or more similar second sets and controlling the antenna system to change the coverage area of the cell from the second to the third area on the basis of the third further set of parameters.

In the shown example, the antenna system 8 comprises two separately controllable antenna arrays 8a and 8b. Antenna array 8a is installed at a first site and antenna array 8b is installed at a second site. Area 18a is a coverage area of another cell of the radio access network associated with the first site and area 18b is a coverage area of yet another cell of the radio access network associated with the second site. Areas of coverage 18a and 18b may also be referred to as sectors of the respective first and second site. Typically a site is associated with three sectors (not shown).

Fig. 10 shows five subsequent situations as indicated by the arrows. In the starting situation a hotspot 26 is present in area 18a. As shown the coverage area 12 of the cell nicely matches this traffic hotspot.

However, in the second situation, the traffic hotspot 26 has moved south, towards area 18b. The coverage area, first area 12, no longer matches the traffic hotspot. Since at least some of the wireless terminals are present in the coverage area 12, the computer system 10 receives indicators from these wireless terminals 2 and the computer system is able to control the antenna system 8 as explained above to change the coverage area from area 12 to area 14.

The result of this change is shown in the third situation and the coverage area, which is now the second area 14, covers the traffic hotspot 26 again. Note that in this situation the computer system 10 has not only controlled antenna array 8a, but also antenna array 8b to change the coverage area from the first area 12 to the second area 14.

However, in the fourth situation the traffic hotspot 26 has travelled even further south. The coverage area of the cell may then be adjusted by the computer system 10 re-performing the method for controlling the antenna system and, of course, the wireless terminals that are present in the second area 14 re-performing the method for transmitting an indicators. As a result, the coverage area of the cell changes from the second area 14 to the third area 16 as shown in the fifth situation. Note that antenna array 8a in the fifth situation no longer transmits radio beams for defining the third area 16, only antenna array 8b is involved in defining the coverage area of the cell to be the third area 16.

Fig. 10 illustrates that the methods and apparatuses disclosed herein enable the coverage area of the cell to "travel" autonomously and that the position of the coverage area of the cell is not bound by e.g. sector boundaries or cell boundaries.

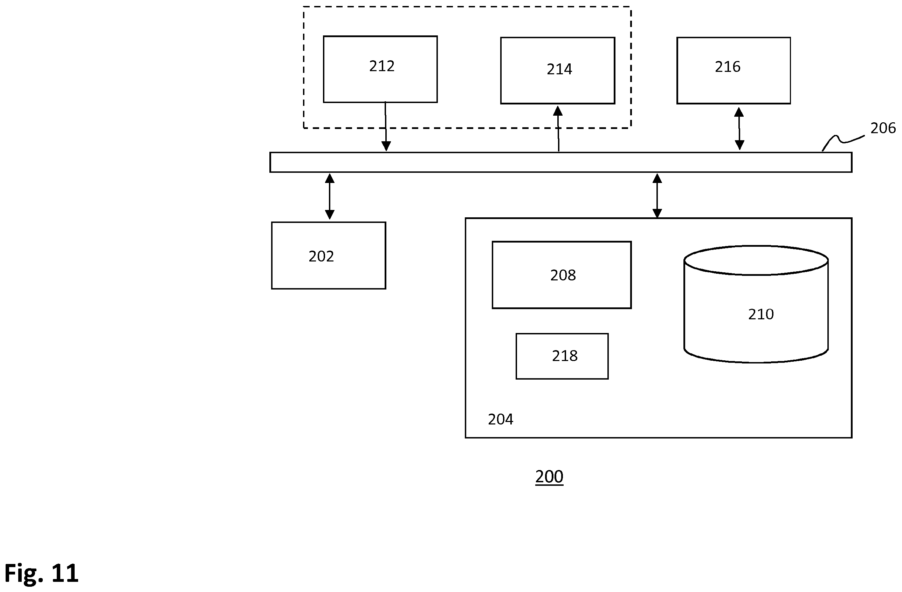

Fig. 11 depicts a block diagram illustrating an exemplary data processing system that may be used in a computer system as described.

As shown in Fig. 11, the data processing system 200 may include at least one processor 202 coupled to memory elements 204 through a system bus 206. As such, the data processing system may store program code within memory elements 204. Further, the processor 202 may execute the program code accessed from the memory elements 204 via a system bus 206. In one aspect, the data processing system may be implemented as a computer that is suitable for storing and/or executing program code. It should be appreciated, however, that the data processing system 200 may be implemented in the form of any system including a processor and a memory that is capable of performing the functions described within this specification.

The memory elements 204 may include one or more physical memory devices such as, for example, local memory 208 and one or more bulk storage devices 210. The local memory may refer to random access memory or other non-persistent memory device(s) generally used during actual execution of the program code. A bulk storage device may be implemented as a hard drive or other persistent data storage device. The processing system 200 may also include one or more cache memories (not shown) that provide temporary storage of at least some program code in order to reduce the number of times program code must be retrieved from the bulk storage device 210 during execution.

Input/output (I/O) devices depicted as an input device 212 and an output device 214 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 11 with a dashed line surrounding the input device 212 and the output device 214). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 216 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 200, and a data transmitter for transmitting data from the data processing system 200 to said systems, devices and/or networks. Modems, cable modems, and Ethernet cards are examples of different types of network adapter that may be used with the data processing system 200.

As pictured in Fig. 11, the memory elements 204 may store an application 218. In various embodiments, the application 218 may be stored in the local memory 208, the one or more bulk
storage devices 210, or apart from the local memory and the bulk storage devices. It should be appreciated that the data processing system 200 may further execute an operating system (not shown in Fig. 11) that can facilitate execution of the application 218. The application 218, being implemented in the form of executable program code, can be executed by the data processing system 200, e.g., by the processor 202. Responsive to executing the application, the data processing system 200 may be configured to perform one or more operations or method steps described herein.

In one aspect of the present invention, the data processing system 200 may represent a computer system as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 202 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method for controlling an antenna system of a radio access network to change a coverage area of a cell of the radio access network from a first area to a second area, the method comprising:

   - transmitting a signal (100) associated with the cell to a plurality of wireless terminals in the first area;
   - receiving (108, 110, 112) from the plurality of wireless terminals respective indicators, wherein each indicator has been determined by a wireless terminal of the plurality of wireless terminals on the basis of the signal and wherein the indicators comprise or are indicative of respective sets of one or more antenna configuration parameters;
   - receiving from the plurality of wireless terminals respective mobility indicators, wherein each mobility indicator is indicative for a direction and velocity of movement of each wireless terminal of the plurality of wireless terminals;
   - determining a degree of similarity between at least two sets of antenna configuration parameters received from the plurality of wireless terminals based on a mathematical distance between the sets of antenna configuration parameters;
   - selecting (114) from the sets of antenna configuration parameters a group of one or more similar sets of antenna configuration parameters, based on the determined degree of similarity;

   - determining (116) a further set of one or more antenna configuration parameters, on the basis of the received mobility indicators and on the group of one or more similar sets of antenna configuration parameters;
   - controlling (118) the antenna system to change the coverage area of the cell from the first to the second area on the basis of the further set of one or more antenna configuration parameters, such that the second area will be relatively large if the velocity of movement of the plurality of wireless terminals is high and relatively small if the velocity of movement of the plurality of wireless terminals is low.

2. The method according to claim 1, wherein at least one of the plurality of wireless terminals is not connected to the cell, the method further comprising transmitting one or more instructions to the at least one wireless terminal to determine an indicator on the basis of the signal and/or to transmit the indicator.

3. The method according to the claim 1 or 2, wherein the first area at least partly overlaps with a coverage area of a second cell of the radio access network and wherein the at least one wireless terminals is connected to the second cell.

4. The method according to claim 2, wherein the at least one wireless terminal is not connected to a cell of the radio access network, further comprising transmitting one or more instructions to the at least one wireless terminal to connect to a cell of the radio access network.

5. The method according to one or more of the preceding claims, comprising transmitting to the plurality of wireless terminals an indication of a size of the to be received indicators.

6. The method according to one or more of the preceding claims, further comprising

   - selecting from the sets a second group of one or more similar sets;
   - determining a second further set on the basis of the second group of one or more similar sets;
   - controlling the antenna system to define a further coverage area on the basis of the second further set of parameters.

7. The method according to one or more of the preceding claims, further comprising

   - transmitting one or more instructions to at least one wireless terminal in the second area to perform a handover procedure.

8. A computer system (10) for controlling an antenna system (8) of a radio access network (4) to change a coverage area of a cell of the radio access network from a first area (12) to a second area (14), the computer system being configured to carry out the method of claim 1.

**Patentansprüche**

1. Verfahren zum Steuern eines Antennensystems eines Funkzugangsnetzes, um einen Versorgungsbereich einer Zelle des Funkzugangsnetzes von einem ersten Bereich in einen zweiten Bereich zu ändern, wobei das Verfahren umfasst:

   - Übertragen eines der Zelle zugeordneten Signals (100) an eine Vielzahl von drahtlosen Endgeräten in dem ersten Bereich;
   - Empfangen (108, 110, 112) jeweiliger Indikatoren von der Vielzahl von drahtlosen Endgeräten, wobei jeder Indikator durch ein drahtloses Endgerät der Vielzahl von drahtlosen Endgeräten auf der Basis des Signals bestimmt worden ist und wobei die Indikatoren jeweilige Sätze von einem oder mehreren Antennenkonfigurationsparametern umfassen oder für diese indikativ sind;
   - Empfangen jeweiliger Mobilitätsindikatoren von der Vielzahl von drahtlosen Endgeräten, wobei jeder Mobilitätsindikator für eine Richtung und Geschwindigkeit einer Bewegung jedes drahtlosen Endgeräts der Vielzahl von drahtlosen Endgeräten indikativ ist;
   - Bestimmen eines Ähnlichkeitsgrades zwischen mindestens zwei Sätzen von Antennenkonfigurationsparametern, die von der Vielzahl von drahtlosen Endgeräten empfangen wurden, basierend auf einem mathematischen Abstand zwischen den Sätzen von Antennenkonfigurationsparametern;
   - Auswählen (114) einer Gruppe von einem oder mehreren ähnlichen Sätzen von Antennenkonfigurationsparametern aus den Sätzen von Antennenkonfigurationsparametern basierend auf dem bestimmten Ähnlichkeitsgrad;
   - Bestimmen (116) eines weiteren Satzes von einem oder mehreren Antennenkonfigurationsparametern auf der Basis der empfangenen Mobilitätsindikatoren und auf der Basis der Gruppe von einem oder mehreren ähnlichen Sätzen von Antennenkonfigurationsparametern;
   - Steuern (118) des Antennensystems, um den Versorgungsbereich der Zelle von dem ersten in den zweiten Bereich auf der Basis des weiteren Satzes von einem oder mehreren Antennenkonfigurationsparametern zu ändern, derart, dass der zweite Bereich relativ groß sein wird, wenn die Bewegungsgeschwindigkeit der Vielzahl von drahtlosen Endgeräten hoch ist, und relativ klein, wenn die Bewegungsgeschwindigkeit der Vielzahl von drahtlosen Endgeräten niedrig ist.

2. Verfahren nach Anspruch 1, wobei mindestens eines der Vielzahl von drahtlosen Endgeräten nicht mit der Zelle verbunden ist, wobei das Verfahren ferner das Übertragen einer oder mehrerer Anweisungen an das mindestens eine drahtlose Endgerät umfasst, um einen Indikator auf der Basis des Signals zu bestimmen und/oder den Indikator zu übertragen.

3. Verfahren nach Anspruch 1 oder 2, wobei der erste Bereich zumindest teilweise mit einem Versorgungsbereich einer zweiten Zelle des Funkzugangsnetzes überlappt und wobei das mindestens eine drahtlose Endgerät mit der zweiten Zelle verbunden ist.

4. Verfahren nach Anspruch 2, wobei das mindestens eine drahtlose Endgerät nicht mit einer Zelle des Funkzugangsnetzes verbunden ist, ferner umfassend das Übertragen einer oder mehrerer Anweisungen an das mindestens eine drahtlose Endgerät, um sich mit einer Zelle des Funkzugangsnetzes zu verbinden.

5. Verfahren nach einem oder mehreren der vorhergehenden Ansprüche, umfassend das Übertragen einer Angabe einer Größe der zu empfangenden Indikatoren an die Vielzahl von drahtlosen Endgeräten.

6. Verfahren nach einem oder mehreren der vorhergehenden Ansprüche, ferner umfassend:

   - Auswählen einer zweiten Gruppe von einem oder mehreren ähnlichen Sätzen aus den Sätzen;
   - Bestimmen eines zweiten weiteren Satzes auf der Basis der zweiten Gruppe von einem oder mehreren ähnlichen Sätzen;
   - Steuern des Antennensystems, um einen weiteren Versorgungsbereich auf der Basis des zweiten weiteren Satzes von Parametern zu definieren.

7. Verfahren nach einem oder mehreren der vorhergehenden Ansprüche, ferner umfassend:

   - Übertragen einer oder mehrerer Anweisungen an mindestens ein drahtloses Endgerät in dem zweiten Bereich, um eine Handover-Prozedur durchzuführen.

8. Computersystem (10) zum Steuern eines Antennensystems (8) eines Funkzugangsnetzes (4), um einen Versorgungsbereich einer Zelle des Funkzugangsnetzes von einem ersten Bereich (12) in einen zweiten Bereich (14) zu ändern, wobei das Computersystem konfiguriert ist, um das Verfahren nach Anspruch 1 auszuführen.

**Revendications**

1. Procédé de commande d'un système d'antenne d'un réseau d'accès radio pour modifier une zone de couverture d'une cellule du réseau d'accès radio d'une première zone à une seconde zone, le procédé comprenant :

> - l'émission d'un signal (100) associé à la cellule vers une pluralité de terminaux sans fil dans la première zone ;
> - la réception (108, 110, 112), en provenance de la pluralité de terminaux sans fil, d'indicateurs respectifs, dans lequel chaque indicateur a été déterminé par un terminal sans fil de la pluralité de terminaux sans fil sur la base du signal et

dans lequel les indicateurs comprennent ou sont indicatifs d'ensembles respectifs d'un ou de plusieurs paramètres de configuration d'antenne ;

> - la réception, en provenance de la pluralité de terminaux sans fil, d'indicateurs de mobilité respectifs, dans lequel chaque indicateur de mobilité est indicatif d'une direction et d'une vitesse de mouvement de chaque terminal sans fil de la pluralité de terminaux sans fil ;
> - la détermination d'un degré de similarité entre au moins deux ensembles de paramètres de configuration d'antenne reçus en provenance de la pluralité de terminaux sans fil sur la base d'une distance mathématique entre les ensembles de paramètres de configuration d'antenne ;
> - la sélection (114), parmi les ensembles de paramètres de configuration d'antenne, d'un groupe d'un ou de plusieurs ensembles similaires de paramètres de configuration d'antenne, sur la base du degré de similarité déterminé ;
> - la détermination (116) d'un ensemble supplémentaire d'un ou de plusieurs paramètres de configuration d'antenne, sur la base des indicateurs de mobilité reçus et du groupe d'un ou de plusieurs ensembles similaires de paramètres de configuration d'antenne ;
> - la commande (118) du système d'antenne pour modifier la zone de couverture de la cellule de la première à la seconde zone sur la base de l'ensemble supplémentaire d'un ou de plusieurs paramètres de configuration d'antenne, de sorte que la seconde zone sera relativement grande si la vitesse de mouvement de la pluralité de terminaux sans fil est élevée et relativement petite si la vitesse de mouvement de la pluralité de terminaux sans fil est faible.

2. Procédé selon la revendication 1, dans lequel au moins l'un de la pluralité de terminaux sans fil n'est pas connecté à la cellule, le procédé comprenant en outre l'émission d'une ou de plusieurs instructions vers l'au moins un terminal sans fil pour déterminer un indicateur sur la base du signal et/ou pour émettre l'indicateur.

3. Procédé selon la revendication 1 ou 2, dans lequel la première zone chevauche au moins partiellement une zone de couverture d'une seconde cellule du réseau d'accès radio et dans lequel l'au moins un terminal sans fil est connecté à la seconde cellule.

4. Procédé selon la revendication 2, dans lequel l'au moins un terminal sans fil n'est pas connecté à une cellule du réseau d'accès radio, comprenant en outre l'émission d'une ou de plusieurs instructions vers l'au moins un terminal sans fil pour se connecter à une cellule du réseau d'accès radio.

5. Procédé selon l'une ou plusieurs des revendications précédentes, comprenant l'émission, vers la pluralité de terminaux sans fil, d'une indication d'une taille des indicateurs devant être reçus.

6. Procédé selon l'une ou plusieurs des revendications précédentes, comprenant en outre

> - la sélection, parmi les ensembles, d'un second groupe d'un ou plusieurs ensembles similaires ;
> - la détermination d'un second ensemble supplémentaire sur la base du second groupe d'un ou de plusieurs ensembles similaires ;
> - la commande du système d'antenne pour définir une zone de couverture supplémentaire sur la base du second ensemble supplémentaire de paramètres.

7. Procédé selon l'une ou plusieurs des revendications précédentes, comprenant en outre

> - l'émission d'une ou de plusieurs instructions vers au moins un terminal sans fil dans la seconde zone pour réaliser une procédure de transfert.

8. Système d'ordinateur (10) pour la commande d'un système d'antenne (8) d'un réseau d'accès radio (4) pour modifier une zone de couverture d'une cellule du réseau d'accès radio d'une première zone (12) à une seconde zone (14), le système d'ordinateur étant configuré pour mettre en œuvre le procédé selon la revendication 1.

Fig. 1

Fig. 2

**Fig. 3A**

**Fig. 3B**

EP 3 563 491 B1

| Codebook index | Number of layers $v$ | |
| --- | --- | --- |
| | 1 | 2 |
| 0 | $\frac{1}{\sqrt{2}}\begin{bmatrix}1\\1\end{bmatrix}$ | $\frac{1}{\sqrt{2}}\begin{bmatrix}1 & 0\\0 & 1\end{bmatrix}$ |
| 1 | $\frac{1}{\sqrt{2}}\begin{bmatrix}1\\-1\end{bmatrix}$ | $\frac{1}{2}\begin{bmatrix}1 & 1\\1 & -1\end{bmatrix}$ |
| 2 | $\frac{1}{\sqrt{2}}\begin{bmatrix}1\\j\end{bmatrix}$ | $\frac{1}{2}\begin{bmatrix}1 & 1\\j & -j\end{bmatrix}$ |
| 3 | $\frac{1}{\sqrt{2}}\begin{bmatrix}1\\-j\end{bmatrix}$ | - |

| indicator | parameter set |
| --- | --- |
| 0 | $\frac{1}{\sqrt{2}}\begin{bmatrix}1\\1\end{bmatrix}$ |
| 1 | $\frac{1}{\sqrt{2}}\begin{bmatrix}1\\-1\end{bmatrix}$ |
| 2 | $\frac{1}{\sqrt{2}}\begin{bmatrix}1\\j\end{bmatrix}$ |
| 3 | $\frac{1}{\sqrt{2}}\begin{bmatrix}1\\-j\end{bmatrix}$ |

**Fig. 4A**

**Fig. 4B**

EP 3 563 491 B1

| Codebook index | $u_n$ | Number of layers $v$ | | | |
|---|---|---|---|---|---|
| | | 1 | 2 | 3 | 4 |
| 0 | $u_0 = \begin{bmatrix} 1 & -1 & -1 & -1 \end{bmatrix}^T$ | $W_0^{\{1\}}$ | $W_0^{\{14\}}/\sqrt{2}$ | $W_0^{\{124\}}/\sqrt{3}$ | $W_0^{\{1234\}}/2$ |
| 1 | $u_1 = \begin{bmatrix} 1 & -j & 1 & j \end{bmatrix}^T$ | $W_1^{\{1\}}$ | $W_1^{\{12\}}/\sqrt{2}$ | $W_1^{\{123\}}/\sqrt{3}$ | $W_1^{\{1234\}}/2$ |
| 2 | $u_2 = \begin{bmatrix} 1 & 1 & -1 & 1 \end{bmatrix}^T$ | $W_2^{\{1\}}$ | $W_2^{\{12\}}/\sqrt{2}$ | $W_2^{\{123\}}/\sqrt{3}$ | $W_2^{\{3214\}}/2$ |
| 3 | $u_3 = \begin{bmatrix} 1 & j & 1 & -j \end{bmatrix}^T$ | $W_3^{\{1\}}$ | $W_3^{\{12\}}/\sqrt{2}$ | $W_3^{\{123\}}/\sqrt{3}$ | $W_3^{\{3214\}}/2$ |
| 4 | $u_4 = \begin{bmatrix} 1 & (-1-j)/\sqrt{2} & -j & (1-j)/\sqrt{2} \end{bmatrix}^T$ | $W_4^{\{1\}}$ | $W_4^{\{14\}}/\sqrt{2}$ | $W_4^{\{124\}}/\sqrt{3}$ | $W_4^{\{1234\}}/2$ |
| 5 | $u_5 = \begin{bmatrix} 1 & (1-j)/\sqrt{2} & j & (-1-j)/\sqrt{2} \end{bmatrix}^T$ | $W_5^{\{1\}}$ | $W_5^{\{14\}}/\sqrt{2}$ | $W_5^{\{124\}}/\sqrt{3}$ | $W_5^{\{1234\}}/2$ |
| 6 | $u_6 = \begin{bmatrix} 1 & (1+j)/\sqrt{2} & -j & (-1+j)/\sqrt{2} \end{bmatrix}^T$ | $W_6^{\{1\}}$ | $W_6^{\{13\}}/\sqrt{2}$ | $W_6^{\{134\}}/\sqrt{3}$ | $W_6^{\{1324\}}/2$ |
| 7 | $u_7 = \begin{bmatrix} 1 & (-1+j)/\sqrt{2} & j & (1+j)/\sqrt{2} \end{bmatrix}^T$ | $W_7^{\{1\}}$ | $W_7^{\{13\}}/\sqrt{2}$ | $W_7^{\{134\}}/\sqrt{3}$ | $W_7^{\{1324\}}/2$ |
| 8 | $u_8 = \begin{bmatrix} 1 & -1 & 1 & 1 \end{bmatrix}^T$ | $W_8^{\{1\}}$ | $W_8^{\{12\}}/\sqrt{2}$ | $W_8^{\{124\}}/\sqrt{3}$ | $W_8^{\{1234\}}/2$ |
| 9 | $u_9 = \begin{bmatrix} 1 & -j & -1 & -j \end{bmatrix}^T$ | $W_9^{\{1\}}$ | $W_9^{\{14\}}/\sqrt{2}$ | $W_9^{\{134\}}/\sqrt{3}$ | $W_9^{\{1234\}}/2$ |
| 10 | $u_{10} = \begin{bmatrix} 1 & 1 & 1 & -1 \end{bmatrix}^T$ | $W_{10}^{\{1\}}$ | $W_{10}^{\{13\}}/\sqrt{2}$ | $W_{10}^{\{123\}}/\sqrt{3}$ | $W_{10}^{\{1324\}}/2$ |
| 11 | $u_{11} = \begin{bmatrix} 1 & j & -1 & j \end{bmatrix}^T$ | $W_{11}^{\{1\}}$ | $W_{11}^{\{13\}}/\sqrt{2}$ | $W_{11}^{\{134\}}/\sqrt{3}$ | $W_{11}^{\{1324\}}/2$ |
| 12 | $u_{12} = \begin{bmatrix} 1 & -1 & -1 & 1 \end{bmatrix}^T$ | $W_{12}^{\{1\}}$ | $W_{12}^{\{12\}}/\sqrt{2}$ | $W_{12}^{\{123\}}/\sqrt{3}$ | $W_{12}^{\{1234\}}/2$ |
| 13 | $u_{13} = \begin{bmatrix} 1 & -1 & 1 & -1 \end{bmatrix}^T$ | $W_{13}^{\{1\}}$ | $W_{13}^{\{13\}}/\sqrt{2}$ | $W_{13}^{\{123\}}/\sqrt{3}$ | $W_{13}^{\{1324\}}/2$ |
| 14 | $u_{14} = \begin{bmatrix} 1 & 1 & -1 & -1 \end{bmatrix}^T$ | $W_{14}^{\{1\}}$ | $W_{14}^{\{13\}}/\sqrt{2}$ | $W_{14}^{\{123\}}/\sqrt{3}$ | $W_{14}^{\{3214\}}/2$ |
| 15 | $u_{15} = \begin{bmatrix} 1 & 1 & 1 & 1 \end{bmatrix}^T$ | $W_{15}^{\{1\}}$ | $W_{15}^{\{12\}}/\sqrt{2}$ | $W_{15}^{\{123\}}/\sqrt{3}$ | $W_{15}^{\{1234\}}/2$ |

**Fig. 5A**

EP 3 563 491 B1

| Indicator | Parameter Set | | | |
|---|---|---|---|---|
| 0 | [0.5 | 0.5 | 0.5 | 0.5 ] |
| 1 | [0.5 | 0,5j | -0,5 | -0,5j ] |
| 2 | [0.5 | -0.5 | 0.5 | -0.5 ] |
| 3 | [0.5 | -0,5j | -0.5 | 0,5j ] |
| 4 | [0.5 | 0.35 + 0.35j | 0.5j | -0.35 + 0.35j] |
| 5 | [0.5 | -0.35 + 0.35j | -0.5j | 0.35 + 0.35j ] |
| 6 | [0.5 | -0.35 − 0.35j | 0.5j | 0.35 − 0.35j ] |
| 7 | [0.5 | 0.35 − 0.35j | -0.5j | -0.35 − 0.35j] |
| 8 | [0.5 | 0.5 | -0.5 | -0.5 ] |
| 9 | [0.5 | 0.5j | 0.5 | 0.5j ] |
| 10 | [0.5 | -0.5 | -0.5 | 0.5 ] |
| 11 | [0.5 | -0.5j | 0.5 | -0.5j ] |
| 12 | [0.5 | 0.5 | 0.5 | -0.5 ] |
| 13 | [0.5 | 0.5 | -0.5 | 0.5 ] |
| 14 | [0.5 | -0.5 | 0.5 | 0.5 ] |
| 15 | [0.5 | -0.5 | -0.5 | -0.5 ] |

## Fig. 5B

**Fig. 6**

EP 3 563 491 B1

Fig. 7A

Fig. 7B

EP 3 563 491 B1

Fig. 8A

Fig. 8B

EP 3 563 491 B1

**Fig. 8C**

**Fig. 9**

8

10

12

14

8

10

8

10

12

8

10

14

15

EP 3 563 491 B1

**Fig. 10**

EP 3 563 491 B1

EP 3 563 491 B1

**Fig. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150131750 A
- US 20120113830 A

- US 2007049218 A

**Non-patent literature cited in the description**

- Performance assessment and Self-Organisation of Virtual Sectorisation in a realistic LTE network. *9th IFIP Wireless and Mobile Networking Conference (WMNC)*, 2016, vol. 2016, 81-88